# EUROPÄISCHE PATENTSCHRIFT

(11) **EP 0 717 407 B1**
(45) Veröffentlichungstag und Bekanntmachung des Hinweises auf die Patenterteilung: **19.03.2003**
(21) Anmeldenummer: 95119334.1
(22) Anmeldetag: 07.12.1995
(51) Int. Cl.: G11B 20/10, G11B 27/30, G11B 7/09

(54) **Erschütterungsresistentes Abspielgerät mit verbesserter Synchronisation**
Vibration-resistant reproducing apparatus with improved synchronisation
Appareil de lecture résistant aux vibrations avec synchronisation améliorée

(30) Priorität: 16.12.1994 DE 4445013
(43) Veröffentlichungstag der Anmeldung: 19.06.1996
(73) Patentinhaber: DEUTSCHE THOMSON-BRANDT GMBH, 78048 Villingen-Schwenningen (DE)
(72) Erfinder: Takagi, Hirohito, D-78052 Villingen-Schwenningen (DE); Rutschmann, Richard, D-79793 Wutöschingen (DE)

(56) Entgegenhaltungen:
- EP-A- 0 249 781
- EP-A- 0 400 810
- EP-A- 0 563 922

## Beschreibung

Die Erfindung betrifft eine Anordnung für ein erschütterungsresistentes Abspielgerät mit verbesserter Synchronisation.

Der Anwendungsbereich erschütterungsresistenter Abspielgeräte erstreckt sich insbesondere auf den transportablen bzw. mobilen Einsatz von Abspielgeräten optischer Informationsträger, bei denen trotz Erschütterungen eine ununterbrochene bzw. ungestörte Informationswiedergabe zu gewährleisten ist, wobei der Anwendungsbereich jedoch nicht auf optische Informationsträger eingeschränkt ist.

Insbesondere optische Abtastgeräte sind empfindlich gegenüber mechanischen Erschütterungen, da das optische Abtastsystem durch Erschütterungen aus der Bahn geworfen werden kann und dadurch der Lesevorgang der auf dem Informationsträger gespeicherten Information unterbrochen wird. Im stationären Betrieb sind diese Erschütterungen so klein, daß sie durch mechanische Vorkehrungen und elektrische Regelkreise ausreichend gedämpft werden können. Bei mobilem Einsatz, wie beispielsweise im Auto oder bei tragbaren Geräten, reichen oben genannte Maßnahmen jedoch nicht mehr aus, und es wird ein Zwischenspeicher verwendet, der während einer Unterbrechung des Lesens des Informationsträgers den Datenstrom zur Wiedergabe puffert. Ein derartiger Zwischenspeicher ist gemäß Datenblatt des Schaltkreises CXD2511Q/R von Sony (Vibration-Protective Memory Controller for CD Players) bekannt. Zum Bereitstellen eines Datenvorrats werden die Daten mit doppelter Geschwindigkeit von der CD gelesen und im Zwischenspeicher abgelegt. Gleichzeitig werden Daten zur Wiedergabe aus dem Speicher mit Normalgeschwindigkeit ausgelesen. Um ein Überlaufen des Speichers zu verhindern, muß das Lesen des Informationsträgers bzw. das Schreiben von Daten in den Zwischenspeicher kontinuierlich unterbrochen und der Lesevorgang nach Unterschreiten eines Minimal-Füllstandes des Zwischenspeichers fortgesetzt werden. Hierzu ist das Abtast- bzw. Lesesystem an den Ort der Unterbrechung zurückzuführen und das Lesen des Informationsträgers kontinuierlich fortzusetzen. Dieses Ablaufschema wird kontinuierlich fortgesetzt, sofern keine Erschütterung auftritt. Dadurch ist bereits im erschütterungsfreien Betrieb eine hohe Zahl von Rücksetzungen bzw. Rücksprüngen des Abtast- bzw. Lesesystems erforderlich. Tritt eine Erschütterung während einer Lesepause auf sind keine besonderen Maßnahmen erforderlich.

Tritt die Erschütterung jedoch während des Lesevorgangs auf, so ist das Auffüllen des Zwischenspeichers sofort abzubrechen und das Abtastsystem möglichst schnell an den Ort zurückzuführen, an dem der Lesevorgang unterbrochen wurde, um erneut Daten vom Informationsträger bzw. der CD zu lesen. Nach erfolgreichem Abschluß dieser Operation wird das Auffüllen des Zwischenspeichers fortgesetzt. Dieses Springen oder Rücksetzen des Abtastsystems an den Ort der Unterbrechung des Lesens von der CD ist somit sowohl erforderlich, wenn Erschütterungen auftreten, als auch erforderlich, wenn keine Erschütterungen in der Betriebsart Erschütterungsresistenz auftreten, da der mit doppelter Geschwindigkeit durchgeführte Lesevorgang bei gefülltem Zwischenspeicher unterbrochen werden muß.

Zum Schreiben von Daten des Informationsträgers in den Zwischenspeicher nach einer Unterbrechung entsprechend der auf dem Informationsträger vorhandenen Reihenfolge, wird das Lesen von der CD mit Daten vor der letzten als gültig mit einem Mikroprozessor ausgewerteten Subcode-Adresse fortgesetzt, und zum Starten des Schreibens in den Zwischenspeicher bzw. zur in der Aufeinanderfolge richtigen Fortsetzung wird ein Vergleich zwischen gespeicherten und gelesenen Audio-Daten durchgeführt. Dieser Audio-Datenvergleich, der bei positivem Ergebnis das Fortsetzen des Schreibens in den Zwischenspeicher steuert, wird nach der Dekodierung und Fehlerkorrektur bzw. unmittelbar vor der digital/analog Wandlung durchgeführt. Der Zwischenspeicher ist an der De-Interleaving und Fehlerkorrektureinheit des Dekoders angeschlossen bzw. unmittelbar vor dem digital/analog Wandler angeordnet. ( Interleaving = Verschachtelung, Überlappung, Codespreizung)
Neben der relativ hohen Rücksprungzahl ohne Erschütterungen besteht ein Problem dieser Lösung in der Zuverlässigkeit der Datensynchronisation für das Starten des Einschreibvorgangs in den Zwischenspeicher. Bei der bekannten Lösung wird zur Synchronisation nach einer Unterbrechung des Schreibens in den Zwischenspeicher eine vorgegebene Datenmenge verwendet, um durch Vergleich den gleichen Ort der Daten zu finden, die bereits im Zwischenspeicher gespeichert wurden. Die auf dem Audio-Datenvergleich beruhende Synchronisation ist nicht immer erfolgreich, da die Datenbits aufgrund von Fehlern nicht stets in gleicher Weise und zeitgenau auftreten. Aufgrund der Fehlerrate können vom gleichen Ort des Informationsträgers nicht stets die gleichen Daten abgeleitet werden. Ein zeitlicher Versatz tritt weiterhin auf, beim Vergleich sehr leiser Passagen, bei dem nur Nullen verglichen werden, oder beim Vergleich von Passagen, die mehrfache Wiederholungen, wie beispielsweise einen Sinus-Ton mit bestimmter Frequenz enthalten.

Der im Zusammenhang mit den Unterbrechungen häufig durchzuführende Datenvergleich bietet keine Gewähr für das Ermitteln des exakten Synchronisationszeitpunktes, führt zu Sprüngen in den Audio-Daten und gewährleistet somit aufgrund von Zeitsprüngen in der Titel- bzw. Diskzeit keine zeitgenaue und der gespeicherten Information entsprechende Wiedergabe. Deshalb wird bereits bei der bekannten Lösung ein Vergleich mit abgestufter Genauigkeit bzw. ein Vergleich in mehreren Stufen durchgeführt, um nach Möglichkeit eine Übereinstimmung herbeizuführen. Es werden die Genauigkeit und die Länge des Vergleichs variiert, um Toleranzen beim Vergleich zuzulassen. Dies führt zu Sprüngen in den Audio-Daten und gewährleistet somit keine zeitgenaue und der gespeicherten Information entsprechende Wiedergabe. Die mehr oder weniger exakte Synchronisation erfolgt im unmittelbar vor dem Digital/Analog Wandler angeordneten Zwischenspeicher, so daß eine fehlerhafte Synchronisation hörbare Störungen verursacht.

Ferner ist als Zwischenspeicher für den möglichst exakten Datenvergleich ein DRAM vorzusehen, der einen erheblichen Kostenfaktor darstellt.

Gemäß EP-A-0 400 810 ist es bereits bekannt, beim Auftreten einer Unterbrechung des Lesens vom Informationsträger während des Spursprungs aufgrund von Vibrationen, die Lesegeschwindigkeit vom Informationsträger auf eine zweite Geschwindigkeit zu erhöhen und Daten mit der zweiten Taktrate in den Zwischenspeicher einzulesen. Diese Stand der Technik offenbart das Wiedergabegerät gemäß den Merkmalen des Oberbegriffs von Anspruch 1.

Darüber hinaus ist es gemäß EP-A-0 563 922 bekannt, zum Zeitbasisausgleich eine Subcode-Begrenzer-Information durch Detektieren mindestens eines von zwei Subcodesynchronsignalen zu verwenden, um eine Synchronisation von Audio Daten zu erreichen.

Es ist deshalb Aufgabe der Erfindung, insbesondere die Zuverlässigkeit und Genauigkeit der Synchronisation zu verbessern und die genannten Nachteile der bekannten Lösung zu vermeiden.

Diese Aufgabe wird mit den in den Hauptansprüchen angegebenen Merkmalen gelöst. Vorteilhafte Aus- und Weiterbildungen sind in Unteransprüchen angegeben.

Obwohl Subcode-Daten im Datenstrom nur in größeren Abständen auftreten, werden eine zuverlässige und exakte Synchronisation bzw. ein nahtloser und der auf dem Informationsträger gespeicherten Information entsprechender Datenanschluß im Zwischenspeicher nach einer Unterbrechung dadurch erreicht, daß eine im Datenstrom den Unterbrechungsort kennzeichnende Adreßinformation verwendet wird. Den Ausgangspunkt der Synchronisation bildet ein gültiger Subcode, dessen Adreßinformation als Referenz sowohl für den Ort der Unterbrechung auf dem Informationsträger als auch für die letzten gültigen Daten im Zwischenspeicher und das Schreiben in den Zwischenspeicher verwendet wird. Mit der den Ort einer Unterbrechung auf dem Informationsträger und im Zwischenspeicher kennzeichnenden Adresse können die Synchronisation und das Schreiben in den Zwischenspeicher nach einer Unterbrechung auch bereits vor der Adresse der Unterbrechung durchgeführt werden, da der Abstand zwischen der erneut gelesenen Adresse und der gespeicherten Adresse der Unterbrechung berechnet werden kann. Die der Adresse folgenden Daten werden dann überschrieben, wodurch eine verkürzte Zeit bis zur Synchronisation erreicht wird. Der Zwischenspeicher ist hierzu vor der Fehlerkorrektur- und De-Interleavingeinheit angeordnet.

Ein Datenvergleich wird nicht durchgeführt und dennoch zuverlässig auch bei variierender Lesegeschwindigkeit innerhalb des Fangbereiches der Bittakt-PLL ein exakter Datenanschluß insbesondere dadurch erreicht, daß der Zwischenspeicher gleichzeitig als Zeitbasisausgleichseinheit dient und Daten mit konstanter Geschwindigkeit aus dem Zwischenspeicher gelesen werden.

Durch das Verwenden von Synchronbits der Subcodeinformation, deren Adresse grundsätzlich gespeichert wird, muß das Schreiben von gelesenen Daten in den Zwischenspeicher im Gegensatz zur bekannten Lösung auch während einer Erschütterung, eines Spursprungs oder Veränderungen der Lesegeschwindigkeit nicht unterbrochen werden. Die beim Auftreten von Unregelmäßigkeiten bekannte Adresse des letzten gültigen Synchronbytes gewährleistet eine exakte Synchronisation, da die Adresse bzw. der Schreibzeiger des Zwischenspeichers zur Synchronisation bzw. zum exakten Datenanschluß entsprechend der auf dem Informationsträger gespeicherten Informationen verwendet wird. Der Synchronisationsort muß nicht zwangslaüfig das letzte gültige Synchronbyte oder die letzte gültige Adresse sein, da von der letzten gültigen Adresse ausgehend die Rahmenstruktur digitaler Datenströme das Berechnen von Adressen im Zwischenspeicher vor dem Auftreten der Unregelmäßigkeit ermöglicht. Von dem gewählten Synchronisationsort ausgehend werden dann alle nachfolgenden, bereits gespeicherten Daten im Zwischenspeicher überschrieben. Trotz der hohen Genauigkeit und Zuverlässigkeit, die mit dieser Synchronisation erreicht wird, ist nur ein geringer Aufwand erforderlich, da die entsprechende Steuereinheit im wesentlichen mit zwei Zählern und einem Register realisiert werden kann.

Aufgrund der Anordnung des Zwischenspeichers zwischen dem EFM-Demodulator und der die digitale Wiedergabeinformation bereitstellenden De-Interleaving und Fehlerkorrektureinheit, kann als Zwischenspeicher ein gegenüber einem DRAM kostengünstiger ARAM verwendet werden. Die Verwendung eines ARAM bzw. Audio- RAM, der teilweise fehlerhaft sein kann, wird durch die Anordnung vor der Fehlerkorrektur ermöglicht.

Es wurde bereits erwähnt, daß eine exakte Synchronisation auch bei schwankender Lesegeschwindigkeit innerhalb des Fangbereiches der Bittakt-PLL gewährleistet wird. Dieser Aspekt ist im Zusammenhang mit einem veränderten Ablauf zum Bereitstellen eines Datenvorrats im Zwischenspeicher zur Überbrückung von Unterbrechungen bedeutungsvoll, der darin besteht, daß die Lesegeschwindigkeit nur zum Auffüllen des Zwischenspeichers über die einfache bzw. Normalgeschwindigkeit ohne besonderen Erschütterungsschutz hinausgehend erhöht wird. Das Erhöhen bzw. Verringern der Lesegeschwindigkeit ist dabei in Abhängigkeit von einem vorgegebenen Füllstand des Zwischenspeichers vorgesehen, um ein durch das Schreiben mit doppelter Geschwindigkeit in den Zwischenspeicher bedingtes, häufiges Rücksetzen der Abtasteinrichtung und Unterbrechungen des Schreibens in den Zwischenspeicher zu vermeiden, die nicht aufgrund von Erschütterungen bzw. eines sogenannten Schocks erforderlich sind. Dadurch werden sowohl der Energieverbrauch als auch die Anzahl erforderlicher Synchronisationen verringert.

Ein weiterer Aspekte besteht in einer schnellen Verfügbarkeit von Daten zur Wiedergabe, die bereits bei erreichen der einfachen Geschwindigkeit gegeben ist.

Obwohl die vorstehenden Ausführungen im wesentlichen auf eine CD als Informationsträger bezogen wurden, wird das Anwendungsgebiet dadurch nicht eingeschränkt, da grundsätzlich alle digitalen Signalspeicher bzw. Informationsträger, wie beispielsweise auch die digitale Bildplatte oder digitale Bänder, eine vergleichsweise ähnliche Datenstruktur aufweisen, die eine Anwendung des der Erfindung zugrunde liegenden Prinzips ermöglicht.

Nachfolgend wird die Erfindung anhand von Zeichnungen näher erläutert.

Es zeigen:
- Fig. 1: Blockschaltbild des erschütterungsresistenten Abspielgeräts mit verbesserter Synchronisation,
- Fig.2: Blockschaltbild der die Synchronisation steuernden Baugruppe des erschütterungsresistenten Abspielgeräts,
- Fig. 3: Blockschaltbild eines bekannten erschütterungsresistenten Abspielgeräts und
- Fig. 4: Datendiagramm zur Synchronisation .

Übereinstimmende Bezugszeichen werden in den Zeichnungen einheitlich verwendet.

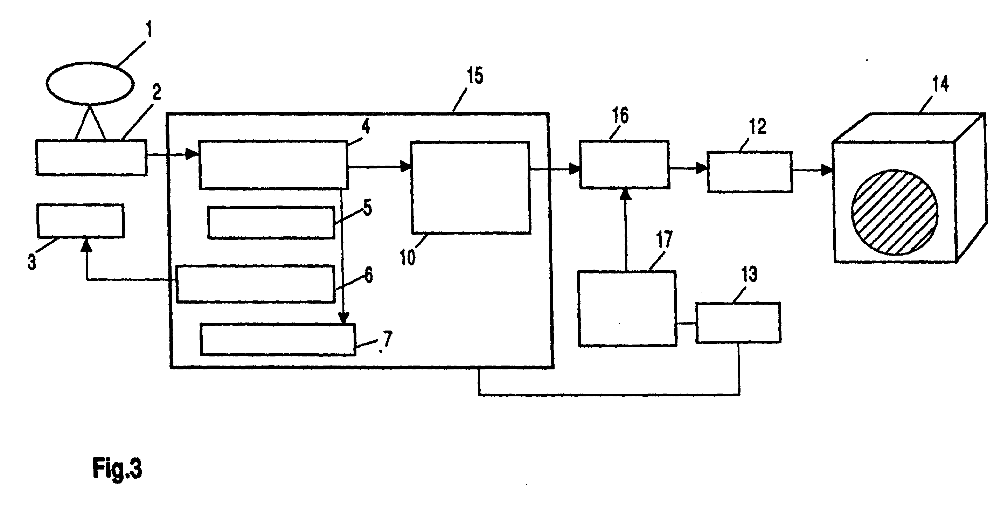

Das bekannte erschütterungsresistente Abspielgerät gemäß Fig.3 weist zum Überbrücken von Unterbrechungen des Lesevorgangs vom Informationsträger 1 einen Zwischenspeicher 16 auf, der an einem eine Fehlerkorrektur- und De-Interleavingeinheit 10 enthaltenden Dekoder 15 angeschlossen ist. Der Zwischenspeicher 16 ist unmittelbar vor dem Digital/Analog Wandler 12, der mit einer Wiedergabeeinrichtung 14 verbunden ist, angeordnet und mit einer Steuereinheit 17 verbunden, die am Mikroprozessor 13 des erschütterungsresistenten Abspielgerätes angeschlossen ist. Um auch während einer Unterbrechung des Lesevorgangs vom Informationsträger 1 durch Erschütterungen eine störungsfreie bzw. ununterbrochene Informationswiedergabe zu gewährleisten, werden vom Informationsträger 1 gelesene Daten mit doppelter Geschwindigkeit in den Zwischenspeicher 16 geschrieben und mit einfacher Geschwindigkeit ausgelesen. Dadurch wird erreicht, daß im Zwischenspeicher 16 stets eine ausreichende Datenmenge zum kurzzeitigen Überbrücken von Unterbrechungen des Lesevorgangs vom Informationsträger 1 vorhanden ist und der Zwischenspeicher 16 nach einer Unterbrechung des Lesevorgangs, die den Zwischenspeicher 16 leert, wieder mit Daten gefüllt wird, um für eine erneute Unterbrechung vorbereitet zu sein. Der Informationsträger 1 wird zum Lesen mit doppelter Geschwindigkeit von einem Motor 3 angetrieben, der mit zweifacher Drehzahl betrieben wird und an einem CLV-Servo 6 angeschlossen ist . Mit dem CLV-Servo 6 wird die Drehzahl des Motors 3, die beim bekannten Abspielgerät grundsätzlich auf das Zweifache erhöht ist, zum Erreichen einer annähernd konstanten Lesegeschwindigkeit in Abhängigkeit vom Abtastradius variiert. Dieses Variieren der Drehzahl erfolgt in dem für eine konstante Lesegeschwindigkeit üblichen Rahmen. Die auf dem Informationsträger 1 gespeicherten Informationen werden mit einem die Abtasteinrichtung 2 bildenden Pickup detektiert und einer Impulsform- und EFM-Demodulatoreinheit 4 zugeführt. Mit der Impulsform- und EFM-Demodulatoreinheit 4 werden insbesondere das vom Informationsträger 1 kommende und noch verschliffene Digitalsignal in ein einigermaßen digitales Signal umgeformt und der für die weitere Bearbeitung der Informationen erforderliche Takt erzeugt. Die EFM (Eight to Fourteen Modulation) ist dabei insbesondere vorgesehen, um auch bei leisen Stellen oder Pausen, bei denen keine Wechsel der einzelnen Bits zwischen ihren möglichen Zuständen auftreten, eine zuverlässige Taktrückgewinnung zu ermöglichen. Hierzu dient insbesondere eine sogenannte Bittakt-PLL 5. Weiterhin sind im Dekoder 15 ein die im Subcode enthaltenen Zusatzinformationen entschlüsselnder Subcode-Dekoder 7 sowie eine Fehlerkorrektur- und De-Interleavingeinheit 10, mit der bei einem CD-Spieler das digitale Audiosignal bereitgestellt wird, vorgesehen. Dieser Fehlerkorrektur- und De-Interleavingeinheit 10 ist bei dem bekannten erschütterungsresistenten Abspielgerät gemäß Fig.3 ein als DRAM ausgeführter Zwischenspeicher 16 nachgeschaltet. Die im Zwischenspeicher 16 zum Überbrücken einer Unterbrechung des Lesens von Informationen vom Informationsträger 1 gespeicherten Audio-Daten werden dann über einen Digital/Analog - Wandler 12 der Wiedergabeeinrichtung 14 zugeführt. Zur Organisation des Zwischenspeichers 16 bzw. zum Schreiben und Auslesen von Daten in und aus dem Zwischenspeicher 16 ist eine auch als Shock Proof Memory Controller bezeichnete Steuereinheit 17 vorgesehen, die mit einem die Steuerung und Datenauswertung des Abspielgerätes organisierenden Mikroprozessor 13 verbunden ist. Mit dem bekannten Verfahren werden bis zu einer Unterbrechung des Lesens von Informationen vom Informationsträger 1 infolge einer Erschütterung oder bei Erreichen des maximalen Füllstandes des Zwischenspeichers 16 Audio-Daten in den Zwischenspeicher 16 geschrieben. Nach einer Unterbrechung werden dann die Abtasteinrichtung 2 an einen der letzten gültigen Subcodeadresse entsprechenden Abtastort zurückgesetzt und das Lesen des Informationsträgers 1 fortgesetzt.

Da die Abtastwerte nach der Fehlerkorrektur und dem De-Interleaving im Zwischenspeicher 16 jedoch nicht abtastwert-genau vorliegen bzw. keine die Adresse der Unterbrechung kennzeichnende Information vorhanden ist, muß ein Vergleich zwischen erneut gelesenen Audio-Daten und im Zwischenspeicher 16 vorhandenen Audio-Daten bis zu einer Übereinstimmung durchgeführt werden. Zur Synchronisation nach einer Unterbrechung des Schreibens in den Zwischenspeicher wird eine vorgegebene Datenmenge bzw. Datenlänge verwendet, um durch Vergleich im Zwischenspeicher den Ort der Daten zu finden, die bereits im Zwischenspeicher gespeichert wurden. Die auf dem Audio-Datenvergleich beruhende Synchronisation ist nicht immer erfolgreich, da die Datenbits aufgrund von Fehlern nicht stets in gleicher Weise und zeitgenau auftreten. Aufgrund der Fehlerrate können vom gleichen Ort des Informationsträgers nicht stets die gleichen Daten abgeleitet werden. Aus diesem Grund wird ein Vergleich mit abgestufter Genauigkeit bzw. ein Vergleich in mehreren Stufen durchgeführt, um nach Möglichkeit eine Übereinstimmung herbeizuführen. Hierzu werden die Genauigkeit und die Länge des Vergleichs variiert, um Toleranzen beim Vergleich zuzulassen. Mit dem Feststellen der mehr oder weniger genauen Übereinstimmung wird dann das Schreiben von gelesenen Daten in den Zwischenspeicher 16 fortgesetzt. Bei sehr leisen Informationsabschnitten, einer Stummschaltung infolge sehr hoher Fehlerrate oder bei Wiederholungen mit gleichem Informationsinhalt führt ein derartiger Vergleich jedoch an unterschiedlichen Orten zu einer Übereinstimmung, die nicht der auf dem Informationsträger 1 gespeicherten Informationsfolge entspricht.

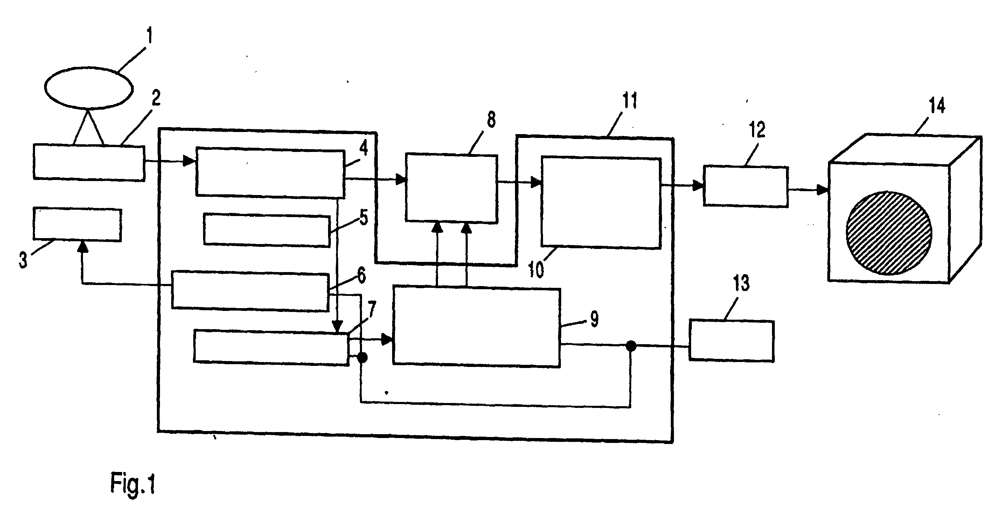

Gegenüber dem bekannten erschütterungsresistenten Abspielgerät sind sowohl das Verfahren als auch die Anordnung Fig. 1, Fig. 2 und Fig. 4 entsprechend verändert. Es ist ein wesentlicher Aspekt des erschütterungsresistenten Abspielgerätes mit verbesserter Synchronisation, daß die Synchronisation unter Verwendung nur in Abständen vorhandener Daten und ohne daß eine Unterbrechung des Schreibens in den Zwischenspeicher 8 bzw. 16 erforderlich ist, mit geringem Aufwand und trotzdem mit hoher Zuverlässigkeit und absoluter Genauigkeit durchgeführt wird. Obwohl üblicher Weise die Adressen der im Zwischenspeicher 8 bzw. 16 zur Datenpufferung gespeicherten Daten nicht parallel abgespeichert werden und somit nicht zur Verfügung stehen, wird dennoch zur Synchronisation eine Adreßinformation verwendet. Dies ist deshalb möglich, da grundsätzlich eine Überprüfung hinsichtlich der Gültigkeit der digitalen Daten mit einer sogenannten CIRC-Prüfung durchgeführt wird. Bei der CIRC-Prüfung handelt es sich um einen von Sony entwickelten Fehlerkorrekturcode, wobei CIRC die Abkürzung für Cross interleave reed solomon code darstellt. Im Zusammenhang mit der CIRC-Prüfung wird auch stets die Anfangsadresse des Synchronbytes S0, die mit dem Subcodedekoder 7 dekodiert wird, vom Mikroprozessor 13 ausgewertet. Obwohl die Adressen der im Zwischenspeicher 8 bzw. 16 Daten nicht parallel abgespeichert werden, steht damit indirekt über das Synchronbyte S0 eine Adreßinformation zur Verfügung, die in vorteilhafter Weise zur Synchronisation im Zwischenspeicher 8 verwendet wird.

Den Ausgangspunkt dieser Synchronisation bildet ein gültiger Subcode, dessen Adreßinformation als Referenz sowohl für den Ort der Unterbrechung auf dem Informationsträger 1 als auch für die letzten gültigen Daten im Zwischenspeicher 8 und das

Schreiben in den Zwischenspeicher 8 verwendet werden kann.

Immer wenn ein gültiger Subcode auftritt, d.h. wenn die CIRC-Prüfung keinen Fehler signalisierte, gibt der den Subcode auswertende Mikroprozessor 13 der Steuereinheit 9 die

Information, daß der letzte Subcode gültig war. In der Steuereinheit 9 wird stets die erste Adresse des Subcodes abgespeichert, d.h. die Adresse der Synchronbytes SO,S1. Damit ist ein Ort der vom Informationsträger 1 gelesenen Daten lokalisiert. Nachdem die Steuereinheit 9 die Information über das Vorliegenden eines gültigen Subcodes erhalten hat, wird die Adresse vorzugsweise in einem Register R1 der Steuereinheit 9 abgespeichert. Dieser abgespeicherte Wert bildet dann die Referenz, wenn eine Erschütterung auftritt. Wenn eine Erschütterung oder ein sogenannter Schock auftritt, ist dadurch die letzte gültige Adresse in der Steuereinheit 9 abgespeichert. Es liegen somit Informationen darüber vor, an welcher Stelle auf dem Informationsträger 1 eine Unterbrechung stattgefunden hat und welche Adresse noch gültig war, bei der in den Zwischenspeicher 8 geschrieben wurde. Nach der Unterbrechung durch einen Schock wird die Abtast- bzw. Leseeinheit an einen Ort des Informationsträgers 1 vor der Unterbrechung zurückgeführt. Dieser Ort kann der letzte gültige Ort oder ein Ort an der Stelle mehrerer Subcodes vor der Unterbrechung sein. Wird die Abtasteinrichtung 2 beispielsweise an einen Ort geführt, der fünf Subcodes vor der Unterbrechung lag, so ist bekannt, daß der Schock fünf Subcodes später auftrat, von dem die Adresse aufgrund der Speicherung in der Steuereinheit 9 bekannt ist. Von dieser Adresse ausgehend wird dann eine Adresse von in diesem Beispiel fünfmal die Anzahl der Bytes zwischen den Subcodes zurück berechnet, so daß der Ort im Zwischenspeicher 8 lokalisiert ist, ab dem der bisherige Zwischenspeicherinhalt überschrieben werden kann.

Andererseits besteht die Möglichkeit bis zu dem Subcode zu fahren, bei dem der Schock aufgetreten ist, und es kann mit der gespeicherten Adresse gestartet werden. Mit dem erneuten Schreiben wird stets ab einem Synchronbyte S0,S1 begonnen, auch wenn nachfolgend noch andere gültige Daten vorhanden sein sollten. Dieses Synchronisieren auf eine absolute Adresse gewährleistet eine absolut zuverlässige Synchronisation, wodurch ein zeitlicher Versatz grundsätzlich ausgeschlossen ist.

Mit der den Ort einer Unterbrechung auf dem Informationsträger 1 und im Zwischenspeicher 8 kennzeichnenden Adresse können die Synchronisation und das Schreiben in den Zwischenspeicher 8 nach einer Unterbrechung auch bereits vor der Adresse der Unterbrechung durchgeführt werden, da der Abstand zwischen der erneut gelesenen Adresse und der gespeicherten Adresse der Unterbrechung berechnet werden kann. Die der Adresse folgenden Daten werden dann überschrieben, wodurch ein Verkürzen der Zeit bis zur Synchronisation erreicht wird.

Zum Realisieren des Verfahrens, bzw. dieser Art der Synchronisation im Zusammenhang mit einem gemäß Fig.3 nach der Fehlerkorrektureinheit 10 angeordneten Zwischenspeicher 16 wäre es erforderlich, daß der zeitliche Abstand zwischen den Synchronbytes S0,S1 und dem Subcode bekannt ist.

Nachfolgend wird die Synchronisation mit einem Fig. 1 entsprechend vor der Fehlerkorrektureinheit 10 angeordneten Zwischenspeicher 8 näher erläutert.

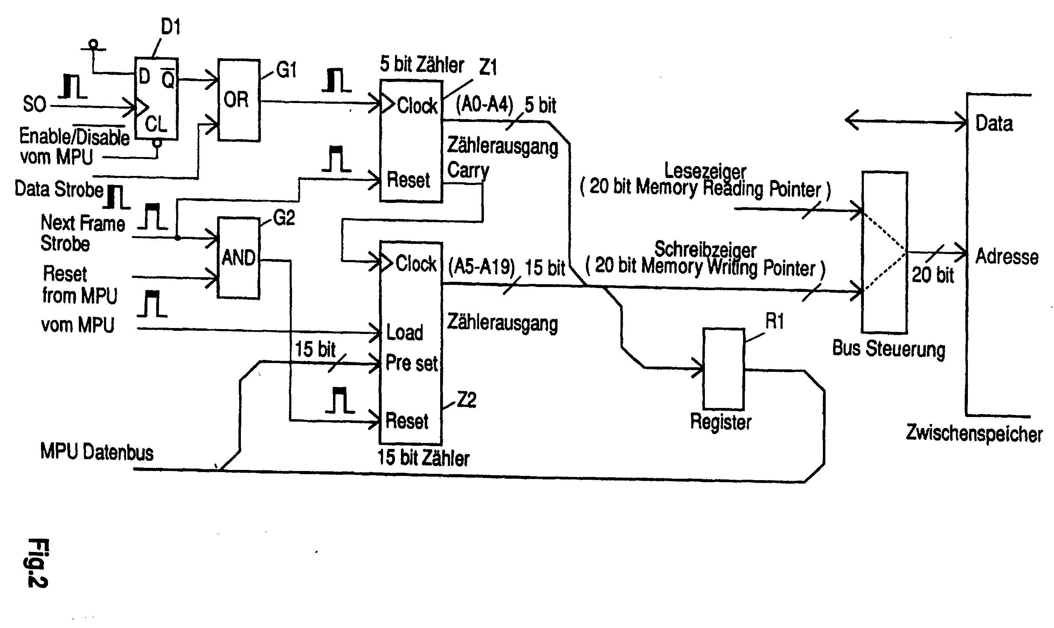

Dieses Verfahren wird mit einer in Fig. 2 als Blockschaltbild angegebenen Schaltungsanordnung der in Fig. 1 dargestellten Steuereinheit 9 realisiert, die mit dem Zwischenspeicher 8 und dem Mikroprozessor 13 verbunden ist. Die Schaltungsanordnung besteht Fig. 2 entsprechend im wesentlichen aus einem ersten Zähler Z1, einem zweiten Zähler Z2 und einem Register R1. Wie bereits erwähnt, wird zur Synchronisation das Synchronbyte S0, insbesondere die ansteigende Flanke des Synchronbytes S0 verwendet, die dem Takteingang CLK des D-Flip-Flops D1 zugeführt wird. Der D-Eingang des D-Flip-Flops D1 ist an einer konstanten Spannung einem Datensymbol 1 entsprechen angeschlossen und der Clear- Eingang CL mit einem Anschluß des im Folgenden mit MPU bezeichneten Mikroprozessors 13 verbunden. Wobei über den Clear- Eingang CL nicht nur der Inhalt des D-Flip-Flops D1 gelöscht wird, sondern mit dem Signal vom Mikroprozessor MPU wird über den Clear- Eingang CL ein nachfolgend noch näher angegebener Schreibzeiger gestartet und gestoppt, mit dem das Schreiben in den Zwischenspeicher 8 gestoppt bzw. gestartet wird. Der Ausgang Qquer des D-Flip-Flops D1 is mit einem Eingang eines Oder-Gatters G1 verbunden, dessem anderen Eingang ein Data-Strobe Data-Strobe zugeführt wird. Jedem parallel anstehenden Synchronbyte S0 ist ein Strobe Data-Strobe zugeordnet.

Wie anhand der in Fig. 2 mit breiterer Linie angegebenen Anstiegsflanke der Impulsform des Synchronbyte S0 und des Data-Strobe Data-Strobe verdeutlicht wird, bildet die Anstiegsflanke den entscheidenden Teil des Signals, das vom Ausgang des Gatters G1 dem Takteingang Clock eines ersten Zählers Z1 zugeführt wird. Das Ausgangssignal des Oder-Gatters G1 bildet den Zähltakt für den angeschlossenen ersten Zähler Z1. Durch eine positive S0-Flanke und Enable vom MPU am D-Flip-Flop D1 wird das Takten bzw. Zählen des Zählers Z1 wie folgt ermöglicht. Die positive S0-Flanke setzt den Qquer Ausgang auf Null, wenn zugleich der Clear- Eingang CL auf Enable gesetzt ist. Durch die positiven Flanken der Data Strobe, die in einem Audio-Frame 32-mal und am zweiten Eingang des Oder-Gatters G1 auftreten, werden am Ausgang des Oder-Gatters G1 bzw. am Takteingang Clock des ersten Zählers Z1 positive Taktflanken Clock erzeugt.

Wird der Clear- Eingang CL des D-Flip-Flops D1 auf Disable gesetzt, erscheint am Ausgang Qquer ein konstanter 1-Pegel. Dies führt dazu, daß die Data-Strobe -Flanken keinen Takt Clock am Ausgang des Oder-Gatters G1 erzeugen, da das Ausgangssignal des Oder-Gatters G1 durch die konstante 1 am Ausgang Qquer ebenfalls konstant 1 ist.

Wird der Clear- Eingang CL des D-Flip-Flops D1 wieder auf Enable gesetzt, so wird mit der nächsten positiven S0-Flanke der Ausgang Qquer des D-Flip-Flops D1 wieder auf Null gesetzt und somit mit den folgenden Data-Strobe das Zählen wieder gestartet. Dieser erste Zähler Z1 ist vorzugsweise ein 5 bit Zähler. Dies resultiert aus der speziellen Ausführung für einen CD-Spieler, da ein Audio-Frame bzw. der Rahmen des Audiosignals 32 Byte aufweist, d. h. es sind 5 bit zur Kennzeichnung von 32 Zuständen erforderlich. Mit dem als Carry bezeichneten Überlauf des 5-bit-Zählers Z1 erhält man dann den Takt für die Audio-Frames. Der erste Zähler Z1 stellt somit den Takt für jedes Byte im Audio-Frame bereit, der dem Takteingang Clock eines zweiten Zählers Z2 zugeführt wird. Der zweite Zähler Z2 ist vorzugsweise ein 15-bit-Zähler, dem alle 32 bit ein Takt vom Überlauf Carry zugeführt wird. Der zweite Zähler Z2 zählt folglich die Audio-Frames bzw. Rahmen, die abgespeichert werden. Dieser 15-bit-Zähler Z2 ist mit einem als Adreßregister verwendeten Register R1 verbunden, das eine Voreinstellung Pre set des zweiten Zählers Z2 ermöglicht. Die Voreinstellung Pre set der Startadresse des 15-bit-Zählers Z2 wird direkt über den Datenbus des Mikroprozessors MPU und durch MPU Load in den zweiten Zähler Z2 geladen. Das Register R1 dient zum Auslesen der letzten S0-Zwischenspeicheradresse. Die Voreinstellung Pre set bildet die kleinste Einheit, die zum Start des Schreibvorgangs in den Zwischenspeicher verwendet werden kann. Der Start wird somit immer mit einem Audio-Frame als kleinste Einheit ermöglicht. Insgesamt 98 Audio-Frame bilden dann einen Subcode. Zur Synchronisation wird ein Synchronbyte S0 als Startpunkt verwendet. Die Synchronisation erfolgt derart, daß zur Synchonisation mit dem nächsten Synchronbyte S0, S1 der zweite Zähler Z2 mit einer Adresse voreingestellt wird und beim Auftreten des Synchronbytes S0 wird dann ein Takt bis in den zweiten Zähler Z2 durchgeschoben, der dann das Schreiben in den Zwischenspeicher mit der vom Mikroprozessor MPU eingeladenen Adresse fortsetzt. Der Abstand zwischen zwei Synchronbytes S0 entspricht dem Subcode, so daß eine Synchronisation mit 75 Hz bzw. im Abstand von 1/75 stel Sekunde bzw. 13,3 Millisekunden ermöglicht wird. Dieser Abstand ist erforderlich, da in diesem Abstand mit dem Mikroprozessor MPU eine Auswertung erfolgt, ob die dazwischenliegenden Audio-Daten als gültig oder ungültig zu betrachten sind und nur diese Adresse zur Verfügung steht. Dabei sind die 13,3 Millisekunden jedoch als sehr geringe Synchronisationszeit zu betrachten, da sie nicht nur als eventuell zutreffende Zeit im Zusammenhang mit einem Datenvergleich zu betrachten ist, sondern aufgrund der Adressierung eine absolute Gewähr für eine erfolgreiche Synchronisation bildet. Der Vollständigkeit halber ist in Fig. 2 weiterhin ein Und- bzw. And-Gatter G2 angegeben, das eine vom Mikroprozessor MPU zwangsweise veranlaßte Rücksetzung synchronisiert mit dem nächsten Audio-Frame ermöglicht. Infolge eines Fehlers oder bei einem kompletten Neustart werden die Zähler Z1,Z2 zunächst auf Null gesetzt. Hierzu wird der als Reset from MPU bezeichnete Eingang des Gatters G2 auf 1 gesetzt und mit dem nächsten Frame Strobe am Next frame Strobe Eingang des Gatters G2 werden dann der erste Zähler Z1 und der zweite Zähler Z2 über ihre jeweiligen Rücksetzeingänge Reset auf Null gesetzt. Dadurch ist die Schreibadresse so lange auf 00 gesetzt, bis der als Reset from MPU bezeichnete Eingang des Gatters G2 wieder auf 0 gesetzt wird. Mit dem Setzen des als Reset from MPU bezeichneten Eingangs auf Null beginnt dann der Start. Bei einem kompletten Neustart wird neben dem Reset der zweite Zähler Z2 über seinen Voreinstelleingang Pre set auf 00 gesetzt. Der Zwischenspeicher wird dann ab der Adresse 00 vollgeschrieben. Bei einem Schock wird ein Disable Signal vom MPU am Clear- Eingang CL des D-Flip-Flops D1 bereitgestellt, wodurch der Schreibzeiger gestoppt wird. Dann wird über den Eingang Load und Pre set ein neuer Adreßwert in den zweiten Zähler Z2 geladen und schließlich wird am Clear- Eingang CL des D-Flip-Flops D1 wieder ein Enable vom MPU angelegt. Als neuer Adreßwert wird dabei die vor der Unterbrechung letztgültige Adresse geladen.

Zur Erläuterung sei beispielsweise angenommen, daß man gerade den Subcode 10 bekommen hat, um nur mal irgendeine Zahl zu nennen, und dann tritt ein Schock auf. Dadurch daß der gültige Subcode 10 erhalten wurde, wurde das Register R1 ausgelesen, das die letzte gültige Adresse des Synchtonbytes S0 darstellt, die gespeichert wird. Dadurch sind die letzte gültige Adresse vom Synchronbyte S0 und der dazugehörige Subcode 10, d.h. die dazugehörige Zeitinformation auf der Platte bekannt. Die Adresse des Zwischenspeichers ist dabei unabhängig von der in der Subcodeinformation gespeicherten absoluten Zeitinformation auf dem Aufzeichnungsträger, die zur Synchronisation nicht zusätzlich abgespeichert wird. Nach dem Schock wird versucht zurückzuspringen, um wieder an den gleichen Subcode 10 beziehungsweise einen Subcode davor zu kommen. Zur Orientierung der Abtasteinrichtung wird in bekannter Weise die Subcodeinformation verwendet, die jedoch nicht direkt zur Orientierung im Zwischenspeicher 8 verwendet werden kann, da hinsichtlich der Adressen keine Übereinstimmung besteht. Die Subcodeadresse ist aufgrund des Durchlaufs der Informationen durch den Zwischenspeicher 8 von der Adresse im Zwischenspeicher unabhängig. Es soll sich dennoch am Subcode zur Synchronisation orientiert werden, wobei jedoch lediglich dessen Gültigkeit zum Ermitteln der zutreffenden Adresse zur Synchronisation im Zwischenspeicher 8 verwendet werden kann. Anhand des letzten gültigen Subcodes wird die zuvor eingelesene Adresse des Zwischenspeichers 8 aus dem Register R1 wieder im zweiten Zähler Z2 über den Voreinstelleingang Pre set voreingestellt und es wird am Clear Eingang des D-Flip-Flops D1 vom MPU Enable eingestellt. Das bedeutet, daß mit dem nächsten Synchronbyte S0 bekannt ist, wo der Schock aufgetreten ist, und mit dem nächsten Synchronbyte wird dann wieder mit der Adresse gestartet, die in den zweiten Zähler Z2 als Voreinstellung geschrieben wurde. Der Ausgang des zweiten Zählers Z2 Zählerausgang stellt den Schreibzeiger über die Bussteuerung Bus Steuerung für den Zwischenspeicher Zwischenspeicher bereit. Der Schreibzeiger setzt sich als 20 bit Memory Writing Pointer aus 5 bit des ersten Zählers Z1 und den 15 bit des zweiten Zählers Z2 zusammen. Mit diesem Schreibzeiger wird der Zwischenspeicher Zwischenspeicher gefüllt bzw. beschrieben. Die Bussteuerung Bus Steuerung schaltet dann wechselweise den Schreibzeiger und den vorzugsweise als 20 bit Memory Reading Pointer ausgebildeten Lesezeiger zur Adressierung des Zwischenspeichers. Die eigentlichen Daten werden dem Zwischenspeicher über den Eingang Data zur Speicherung zugeführt.

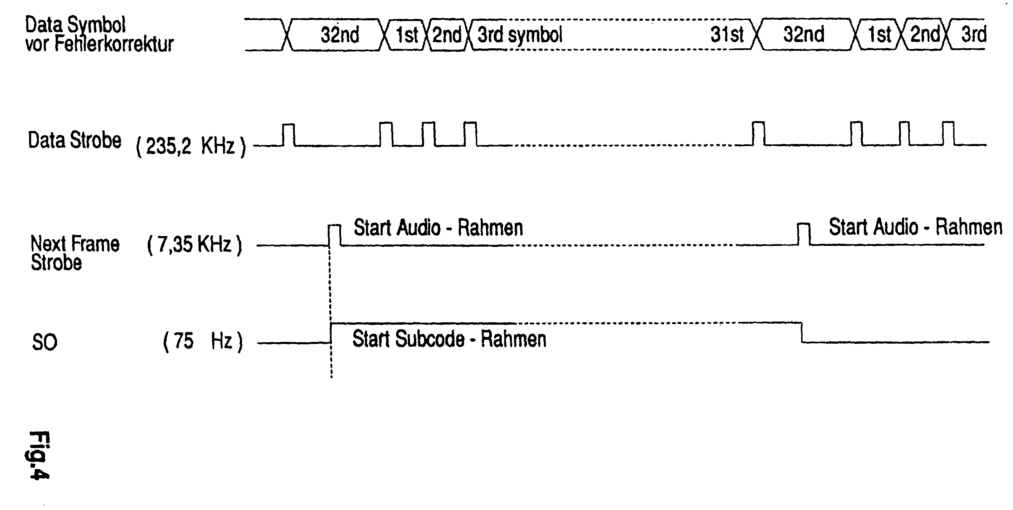

Der entsprechende Datenverlauf ist anhand eines in Fig. 4 dargestellten Datendiagramms zur Synchronisation angegeben. In der oberen Zeile sind Datensymbole vor der Fehlerkorrektur dargestellt, die als Folge von 32 aufeinander folgenden Symbolen auftreten. Dabei handelt es sich um 24 Byte Audio-Daten und 8 Byte Fehlerkorrekturdaten. In der Zeile drunter ist der Data Strobe für jedes Byte angegeben und in der darauf folgenden Zeile ist das alle 32 Byte erscheinende Next Frame Strobe für einen Audio-Rahmen dargestellt. Das in der letzten Zeile dargestellte Synchronbyte S0 tritt im Abstand von 1/75 stel Sekunden, d.h. im Abstand von 98 Audio-Rahmen auf. Das Synchronbyte S0 erscheint somit entsprechend 98 mal 32 Bytes.

Die Länge des Synchronbytes S0 ist dabei unwesentlich, da wie in Fig. 2 dargestellt, nur die ansteigende Flanke des Synchronbytes S0 für die Steuerung ausschlaggebend ist.

Obwohl die vorstehenden Ausführungen zur Synchronisation im wesentlichen auf einen Informationsträger 1 in Form einer CD bezogen wurden, so wird das Anwendungsgebiet dadurch nicht eingeschränkt, da grundsätzlich alle digitalen Signalspeicher bzw. Informationsträger, wie beispielsweise auch die digitale Bildplatte oder digitale Bänder, eine vergleichsweise ähnliche Datenstruktur aufweisen, die eine Anwendung des dargestellten Prinzips ermöglicht. Die Anwendung ist somit auch im Zusammenhang mit magnetischen oder mechanischen Abtasteinrichtungen sowie bandförmigen und anderen flächenhaften Informationsträgern möglich. Aufgrund der Anordnung des Zwischenspeichers 8 zwischen dem EFM - Demodulator 4 und der die digitale Audioinformation bereitstellenden De-Interleaving und Fehlerkorrektureinheit 10, kann als Zwischenspeicher 8 ein gegenüber einem DRAM kostengünstiger ARAM verwendet werden. Die Verwendung eines ARAM bzw. Audio- RAM, der teilweise fehlerhaft sein kann, als Zwischenspeicher 8, mit dem auch die Synchronisation nach einer Unterbrechung durchgeführt wird, wird durch die Anordnung vor der Fehlerkorrektureinheit 10 ermöglicht.

Der Zwischenspeicher 8 ist der in Fig. 1 dargestellten Ausführung entsprechend zwischen einer Impulsform- und EFM-Demodulatoreinheit 4 und der Fehlerkorrektur- und De-Interleavingeinheit 10 angeordnet. Diese Anordnung des Zwischenspeichers 8 ermöglicht in vorteilhafter Weise das Verwenden von Adreßinformationen zur Synchronisation. Obwohl die in Subcodeinformationen vorhandenen Adreßinformationen nur in großen Abständen auftreten und die Lesegeschwindigkeit zeitweilig verändert wird, ist ihre Verwendung aufgrund der vom Zwischenspeicher 8 ausgehenden Zeitbasisausgleichsfunktion möglich.

Ein weiterer Aspekte besteht in einer schnellen Verfügbarkeit von Daten zur Wiedergabe nach einem Start des Abspielgerätes.

Wird das vorgestellte erschütterungsresistente Abspielgerät gestartet, stehen bereits bei Erreichen der Normalgeschwindigkeit, die der einfachen bzw. ersten Lesegeschwindigkeit V1 entspricht, Daten des Informationsträgers 1 im Zwischenspeicher 8 bzw. 16 zur Wiedergabe zur Verfügung und die Wiedergabe muß nicht bis zum Beschleunigen auf die zweifache Lesegeschwindigkeit des bekannten Abspielgerätes verzögert werden, wodurch als weiterer Vorteil eine kürzere Zugriffszeit erreicht wird.

## Patentansprüche

1. Erschütterungsresistentes Wiedergabegerät mit verbesserter Synchronisation, mit einen Steuereinheit (9), einem Zwischenspeicher zum Bereitstellen von Informationssignalen von einem Informationsträger (1) während einer Unterbrechung des Lesens auf dem Informationsträger (1) gespeicherter Informationen, einer zur Verarbeitung der vom Informationsträger gelesenen Informationen vorgesehene Bittakt-PLL (5), einem Subcode - Dekoder (7) und einem Mikroprozessor (13) **dadurch gekennzeichnet, dass** die steuereinheit die Adresse des Zwischenspeichers bei der leizten gültigen Subcode information vor der Unterbrechung speichert und dass diese gültige Subcodeinformation als Referenz zum Zurückführen einer Abtastund Leseeinheit an einen Ort des Informationsträgers (1) vor der Unterbrechung und zum Synchronisieren vom lnformabonsträger (1) gelesener lnformationssignale im Zwischenspeicher (8) nach der Unterbrechung verwendet wird, indem zum Synchronisieren ein im Zwischenspeicher (8) mehrere subcodes vor der Unterbrechung gespeichertes Synchronbyte (SO) verwendet wird, dessen Ort im Zwischenspeicher (8) mit der Anzahl der Bytes zwischen der erneut zu lesenden Subcodeinformation auf dem Informationsträger und der als Referenz gespeicherter Subcodeinformation berechnet wird.

2. Erschütterungsresistentes Wiedergabegerät nach Anspruch 1, **dadurch gekennzeichnet, dass** die Steuereinheit (9) einen mit einer Flanke des Synchronbytes (S0) gestarteten und mit einem Data Strobe (Data Strobe) getakteten ersten Zähler (Z1) aufweist, dessen Überlaufausgang (Carry) mit dem Takteingang (Clock) eines zweiten Zählers (Z1) verbunden ist, der sowohl rücksetzbar als auch mit einer von einem angeschlossenen Register (R) bereitgestellten Adresse des Zwischenspeichers (8) voreinstellbar ist und die Ausgänge des ersten und des zweiten Zählers (Z1, Z2) zu einem Adressanschluss des Zwischenspeichers (8) verbunden sind, an dem das Register (R) angeschlossen ist.

3. Erschütterungsresistentes Wiedergabegerät nach Anspruch 1, **dadurch gekennzeichnet, daß** mit der Steuereinheit (9) die Lesegeschwindigkeit der auf dem Informationsträger (1) gespeicherten Informationen kontinuierlich veränderbar zwischen einer ersten Lesegeschwindigkeit (V1) und einer zweiten Lesegeschwindigkeit (V2) innerhalb eines Fangbereiches der Bittakt-PLL (5) in Abhängigkeit von einem vorgegeben Füllstand des Zwischenspeichers (8) einstellt wird.

4. Erschütterungsresistentes Wiedergabegerät nach Anspruch 1, **dadurch gekennzeichnet, daß** die Steuereinheit (9) als ein integrierter Bestandteil eines Decoders (11) ausgeführt ist, der zum Bereitstellen von einem vom Informationsträger (1) gelesenen Informationssignal vorgesehen ist.

5. Erschütterungsresistentes Wiedergabegerät nach Anspruch 1, **dadurch gekennzeichnet, daß** der Zwischenspeicher (8) zwischen einer ersten Baugruppe zur Impulsformung des vom Informationsträger gelesenen Signals (4) und-einer zweiten Baugruppe zur Fehlerkorrektur (10) angeordnet ist.

6. Erschütterungsresistentes Wiedergabegerät nach Anspruch 1, **dadurch gekennzeichnet, daß**
die Adresse letzter gültiger Daten im Zwischenspeicher (8) als Referenz für den Ort der Unterbrechung auf dem Informationsträger (1) und für letzte gültige Daten im Zwischenspeicher (8) verwendet wird, um
eine Information zu überschreiben, die bereits mit kontinuierlich veränderbarer Geschwindigkeit im Zwischenspeicher (8) gespeichert wurde.

7. Erschütterungsresistentes Wiedergabegerät nach Anspruch 1, **dadurch gekennzeichnet, daß** die Adresse für letzte gültige Daten im Zwischenspeicher (8) in ein Register (R1) übertragen wird und zusammen mit einem gültigen Subcode und zusammen mit einem Synchronisationsbyte als Ausgangspunkt für die Synchronisation nach einer Unterbrechung verwendet wird.

8. Erschütterungsresistentes Wiedergabegerät nach Anspruch 1, **dadurch gekennzeichnet, daß** ein Mikroprozessor (13) vorgesehen ist, mit dem aus der Adresse des Synchronbyte (SO) im Zwischenspeicher (8), die zum Ermitteln einer Unterbrechung des Lesens vom Informationsträger (1) zusammen mit dem gültigen Subcode in ein Register übertragen wird, eine Adresse des Zwischenspeichers (8) berechnet wird, die einer Adresse vor der letzten gültigen Adresse des Zwischenspeichers (8) vor der Unterbrechung entspricht und das Schreiben in den Zwischenspeicher (8) an der berechneten Adresse mit dem der berechneten Adresse entsprechenden Synchronbyte zur Synchronisation vom Informationsträger (1) gelesener Informationen im Zwischenspeicher (8)fortgesetzt wird.

9. Erschütterungsresistentes Wiedergabegerät nach Anspruch 1, **dadurch gekennzeichnet, daß** in Abhängigkeit von einem ersten Füllstandswert und einem zweiten Füllstandswert unterhalb der Speicherkapazität des Zwischenspeichers (8) mit der Steuereinheit (9) zwischen einer ersten Lesegeschwindigkeit (V1) und einer zweiten Lesegeschwindigkeit (V2) kontinuierlich veränderbare Lesegeschwindigkeiten zum Lesen auf dem Informationsträger (1) gespeicherter Informationen eingestellt werden.

10. Erschütterungsresistentes Wiedergabegerät nach Anspruch 1, **dadurch gekennzeichnet, daß** eine Adresse eines Synchronisationsbytes der Subcode-Informationen der vom Informationsträger (1) gelesenen Informationen, die einer im Zwischenspeicher (8) gespeicherten Information entspricht, zum Synchronisieren von Daten im Zwischenspeicher (8) nach einer Unterbrechung des Schreibens von Daten in den Zwischenspeicher (8) verwendet wird.

11. Erschütterungsresistentes Wiedergabegerät nach Anspruch 1, **dadurch gekennzeichnet, dass** ein Mikroprozessor (13) vorgesehen ist, der mit einem Decoder (11) und dem Zwischenspeicher (8) verbunden ist, und Mittel zum Berechnen und Bewerten von Subcode-Informations-Adreßdaten vom Subcode-Decoder (7) und von einer Steuereinheit (9) zum Speichern einer Adresse des Zwischenspeichers (8) im Fall einer letzten gültigen Subcode-Information enthält, die vom Mikroprozessor (13) gesteuert werden und der mit einem Synchronisationsbyte nach einer Unterbrechung das Synchronisieren des Datenstroms im Zwischenspeicher (8) startet, wobei die Steuereinheit (9) einen ersten Zähler (Z1) enthält, der mit einer Flanke eines Synchronisationsbytes gestartet wird, die mit einem Datenimpuls getaktet ist, ein zweiter Zähler (Z2) vorgesehen ist, dessen Takteingang mit dem Überlauf des ersten Zählers (Z1) verbunden ist und der mit einer Adresse des Zwischenspeichers (8) zurückgesetzt oder voreingestellt werden kann, die über ein am ersten Zähler (Z1) angeschlossenes Register (R1) bereitgestellt wird, um eine Adressierte-Verbindung zum Zwischenspeicher (8) herzustellen.

12. Erschütterungsresistentes Wiedergabegerät nach Anspruch 1, **dadurch gekennzeichnet, dass** mit der Steuereinheit (9) das Synchronisieren vom Informationsträger (1) gelesener Informationssignale nach einer Unterbrechung an einer vom Ort der Unterbrechung unabhängigen Adresse im Zwischenspeicher durchgeführt wird, indem ein der letzten gültigen Subcodeinformation vor der Unterbrechung vorangehendes Synchronbyte (SO) zum Speichern der Subcodeinformation und zum Bestimmen einer Adresse im Zwischenspeicher (8) zur Synchronisation verwendet wird.

13. Erschütterungsresistentes Wiedergabegerät nach Anspruch 1, **dadurch gekennzeichnet, dass** mit der Steuereinheit (9) das Schreiben von Informationssignalen von einem Informationsträger (1) in den Zwischenspeicher (8) nach einer Unterbrechung an einer Adresse des Zwischenspeichers(8) zur Synchronisation vom Informationsträger (1) gelesener Informationen im Zwischenspeicher (8) vorgesehen ist, an der mit einem Synchronbyte (SO) unabhängig von einem Ort vor der Unterbrechung Informationssignale in den Zwischenspeicher (8) geschrieben wurden.

14. Erschütterungsresistentes Wiedergabegerät nach Anspruch 1, **dadurch gekennzeichnet, dass** die Steuereinheit (9) das Schreiben von Informationssignalen von einem Informationsträger (1) in den Zwischenspeicher (8) nach einer Unterbrechung an einer Adresse des Zwischenspeichers (8) zur Synchronisation vom Informationsträger (1) gelesener Informationen im Zwischenspeicher (8) fortsetzt, an der mit einem Synchronbyte (SO) bereits Informationssignale in den Zwischenspeicher (8) geschrieben wurden und die einen Abstand zur Adresse des Zwischenspeichers (8) aufweist, welcher der Differenz in Byte zur gespeicherten, letzten gültigen Subcodeinformation vor der Unterbrechung entspricht, an der mit dem Synchronbyte (S0) ein Informationssignal in den Zwischenspeicher (8) geschrieben wurde.

15. Erschütterungsresistentes Wiedergabegerät nach Anspruch 1, **dadurch gekennzeichnet, dass** die Steuereinheit (9) das Schreiben von Informationssignalen an Adressen des Zwischenspeichers (8) mit jedem Synchronbyte (SO) startet, eine bis zum Eintreffen des Synchronbyte (SO) gültige Subcodeinformation speichert und nach einer Unterbrechung des Lesens auf dem Informationsträger (1) gespeicherter Informationen eine Adresse zum Schreiben von Informationssignalen in den Zwischenspeicher (8) bereitstellt, die durch Rücksetzen der Adresse des Zwischenspeichers (8) um eine Anzahl nach dem Synchronbyte (SO) generierten Adressen und um eine Anzahl von Adressen gebildet wird, die zum Speichern von Byte des Informationssignals vorgesehen ist, die der Anzahl der Byte zwischen dem letzten gültigen Subcode und dem aktuellen Subcode nach der Unterbrechung vor dem Ort der Unterbrechung des Lesens auf dem Informationsträger (1) gespeicherter Informationen entspricht.

## Revendications

1. Appareil de reproduction résistant aux vibrations avec synchronisation améliorée équipé d'une unité de commande (9), d'une mémoire temporaire pour la préparation de signaux d'information d'un support d'information (1) pendant une interruption de la lecture des informations enregistrées sur le support d'information (1), d'une boucle à verrouillage de phase à rythme numérique (5) prévue pour le traitement des informations lues par le support d'information, d'un décodeur de sous-code (7) et d'un microprocesseur (13), **caractérisé en ce que** l'unité de commande enregistre l'adresse de la mémoire temporaire correspondant aux dernières informations de sous-codes valides avant l'interruption et **en ce que** ces informations de sous-code valides sont utilisées comme référence pour le retour arrière d'une unité de balayage et de lecture à un emplacement du support d'information (1) avant l'interruption et pour la synchronisation de signaux d'information lus par le support d'information (1) dans la mémoire temporaire (8) après l'interruption, dans lequel on utilise pour la synchronisation un octet de synchronisation (S0) enregistré plusieurs sous-codes avant l'interruption dans la mémoire temporaire (8) dont l'emplacement dans la mémoire temporaire (8) est déterminé à l'aide du nombre d'octets entre les informations de sous-code à relire sur le support d'information et les informations de sous-code enregistrées comme référence dans la mémoire.

2. Appareil de reproduction résistant aux vibrations selon la revendication 1, **caractérisé en ce que** l'unité de commande (9) présente un premier compteur (Z1) démarré par un flanc de l'octet de synchronisation (S0) et synchronisé avec un échantillonnage de données (Data Strobe), dont la sortie de débordement (Carry) est raccordée à l'entrée d'horloge (Clock) d'un deuxième compteur (Z2) non seulement réinitialisable, mais également préréglable avec une adresse de la mémoire temporaire (8) préparée par un registre (R) connecté et les sorties des premier et deuxième compteurs (Z1 Z2) sont raccordées à une connexion d'adresse de la mémoire temporaire (8) à laquelle est connecté le registre (R) .

3. Appareil de reproduction résistant aux vibrations selon la revendication 1, **caractérisé en ce que** l'unité de commande (9) permet de faire passer constamment la vitesse de lecture des informations enregistrées sur le support d'information (1) d'une première vitesse de lecture (V1) à une deuxième vitesse de lecture (V2) au sein d'un domaine de capture de la boucle à verrouillage de phase à rythme numérique (5) en fonction d'un niveau de mémoire temporaire (8) prédéterminé.

4. Appareil de reproduction résistant aux vibrations selon la revendication 1, **caractérisé en ce que** l'unité de commande (9) est réalisée comme un élément intégré d'un décodeur (11) prévu pour la préparation d'un signal d'information lu par le support d'information (1).

5. Appareil de reproduction résistant aux vibrations selon la revendication 1, **caractérisé en ce que** la mémoire temporaire (8) est placée entre un premier bloc destiné à la formation d'impulsions du signal (4) lu par le support d'information et un deuxième bloc destiné à la correction des erreurs (10) .

6. Appareil de reproduction résistant aux vibrations selon la revendication 1, **caractérisé en ce que** l'adresse des dernières données valides dans la mémoire temporaire (8) est utilisée comme référence pour le point d'interruption sur le support d'information (1) et pour les dernières données valides dans la mémoire temporaire (8), pour décrire des informations qui ont déjà été enregistrées dans la mémoire temporaire (8) à une vitesse constamment modifiable.

7. Appareil de reproduction résistant aux vibrations selon la revendication 1, **caractérisé en ce que** l'adresse des dernières données valides dans la mémoire temporaire (8) est transférée dans un registre (R1) et utilisée avec un sous-code valide et un octet de synchronisation comme point de départ pour la synchronisation après une interruption.

8. Appareil de reproduction résistant aux vibrations selon la revendication 1, **caractérisé en ce qu'**un microprocesseur (13) est prévu, lequel permet de déterminer à partir de l'adresse de l'octet de synchronisation (S0) dans la mémoire temporaire (8) transmise avec le sous-code approprié dans un registre pour identifier une interruption de la lecture du support d'information (1) une adresse de la mémoire temporaire (8) correspondant à une adresse précédant la dernière adresse valide de la mémoire temporaire (8) avant l'interruption et l'écriture dans la mémoire temporaire (8) se poursuit à l'adresse déterminée avec l'octet de synchronisation correspondant à l'adresse déterminée pour la synchronisation des informations lues par le support d'information (1) dans la mémoire temporaire (8).

9. Appareil de reproduction résistant aux vibrations selon la revendication 1, **caractérisé en ce que**, en fonction d'une première valeur de niveau et d'une deuxième valeur de niveau inférieure à la capacité de stockage de la mémoire temporaire (8), l'unité de commande (9) permet de régler des vitesses de lecture constamment modifiables entre une première vitesse de lecture (V1) et une deuxième vitesse de lecture (V2) pour la lecture des informations enregistrées sur le support d'information (1).

10. Appareil de reproduction résistant aux vibrations selon la revendication 1, **caractérisé en ce qu'**une adresse d'un octet de synchronisation des informations de sous-code des informations lues par le support d'information (1) qui correspond à des informations enregistrées dans la mémoire temporaire (8) est utilisée pour la synchronisation de données dans la mémoire temporaire (8) après une interruption de l'écriture de données dans la mémoire temporaire (8).

11. Appareil de reproduction résistant aux vibrations selon la revendication 1, **caractérisé en ce qu'un** microprocesseur (13) est prévu, lequel est raccordé à un décodeur (11) et à la mémoire temporaire (8) et comporte des moyens permettant de déterminer et d'évaluer des données d'adresse d'informations de sous-code provenant du décodeur de sous-code (7) et d'une unité de commande (9) pour l'enregistrement d'une adresse de la mémoire temporaire (8) dans le cas de dernières informations de sous-code valides commandés par un microprocesseur (13) et démarre la synchronisation du flux de données avec un octet de synchronisation après une interruption dans la mémoire temporaire (8), et dans lequel l'unité de commande (9) comporte un premier compteur (Z1) démarré par un flanc d'un octet de synchronisation synchronisé avec une impulsion de données, un deuxième compteur (Z2) dont l'entrée d'horloge est raccordée avec le débordement du premier compteur (Z1) et qui peut être réinitialisé ou préréglé avec une adresse de la mémoire temporaire (8) préparée par un registre (R1) connecté au premier compteur (Z1) pour une liaison d'adressage vers la mémoire temporaire (8) est prévu.

12. Appareil de reproduction résistant aux vibrations selon la revendication 1, **caractérisé en ce que** l'unité de commande (9) permet de synchroniser des signaux d'information lus par le support d'information (1) après une interruption à une adresse indépendante du point d'interruption dans la mémoire temporaire (8) via l'utilisation de l'une des dernières informations de sous-code valides de l'octet de synchronisation (S0) disponible avant l'interruption pour l'enregistrement des informations de sous-code et la détermination d'une adresse dans la mémoire temporaire (8) pour la synchronisation.

13. Appareil de reproduction résistant aux vibrations selon la revendication 1, **caractérisé en ce que** l'écriture de signaux d'information d'un support d'information (1) dans la mémoire temporaire (8) après une interruption est prévue avec l'unité de commande (9) au niveau d'une adresse de la mémoire temporaire (8) pour la synchronisation des informations lues par le support d'information (1) dans la mémoire temporaire (8) à laquelle des signaux d'information sont écrits dans la mémoire temporaire (8) avec un octet de synchronisation indépendant du point précédant l'interruption.

14. Appareil de reproduction résistant aux vibrations selon la revendication 1, **caractérisé en ce que** l'unité de commande (9) poursuit l'écriture de signaux d'information d'un support d'information (1) dans la mémoire temporaire (8) après une interruption à une adresse de la mémoire temporaire (8) pour la synchronisation des informations lues par le support d'information (1) à laquelle des signaux d'information sont déjà écrits dans la mémoire temporaire (8) avec un octet de synchronisation S0, qui présente un écart par rapport à l'adresse de la mémoire temporaire (8) correspondant à l'écart en octets par rapport aux dernières informations de sous-code valides enregistrées précédant l'interruption et à laquelle un signal d'information a été écrit dans la mémoire temporaire (8) avec l'octet de synchronisation (S0).

15. Appareil de reproduction résistant aux vibrations selon la revendication 1, **caractérisé en ce que** l'unité de commande (9) démarre l'écriture de signaux d'information à des adresses de la mémoire temporaire (8) avec chaque octet de synchronisation (S0), enregistre des informations de sous-code valides jusqu'à l'arrivée de l'octet de synchronisation (S0) et prépare après une interruption de la lecture des informations enregistrées sur le support d'information (1) une adresse pour l'écriture de signaux d'information dans la mémoire temporaire (8) en réinitialisant l'adresse de la mémoire temporaire (8) d'un nombre d'adresses générées par l'octet de synchronisation (S0) prévu pour l'enregistrement d'octets du signal d'informations et qui correspond au nombre d'octets entre le dernier sous-code valide et le sous-code actuel après l'interruption avant le point d'interruption de la lecture des informations enregistrées sur le support d'information (1).

## Claims

1. Vibration-resistant playback device having improved synchronization including a control unit (9), a buffer for providing information signals from an information medium (1) during an interruption of the reading of information stored on the information medium (1), a bit timing PLL (5) for processing the information read from the information medium, a subcode decoder (7) and a microprocessor (13),
**characterized in that**
the control unit stores the address of the buffer at the last valid subode information before the interruption and that this valid subcode information is used as a reference for returning a writing- and reading-unit to a location of the information medium (1) before the interruption and for synchronizing of information signals read from the information medium (1) within the buffer (8) after the interruption by using a synchron byte (SO) stored within the buffer several subcodes before the interruption, the location of which within the buffer (8) is calculated with the number of bytes between the anew read subcode information on the information medium and the subcode information stored as reference.

2. Vibration-resistant playback device according to claim 1, **characterized in that** the control unit (9) has a first counter (Z1) which is started by an edge of the synchronization byte (SO) and is clocked by a data strobe (Data Strobe) and the carry output (Carry) of which is connected to the clock input (Clock) of a second counter (Z2), which can be both reset and preset with a write pointer address provided by a connected register (R), and the outputs of the first and of the second counter (Z1, Z2) are connected to form a write pointer connection, to which the register (R) is connected.

3. Vibration-resistant playback device according to claim 1, **characterized in that** that by means of the control unit (9) the reading speed of the informations stored on the information medium (1) can be varied continuously between a first reading speed (V1) and a second reading speed (V2) within a capture range of the bit timing PLL (5) in dependence from a predetermined level of the buffer (8).

4. Vibration-resistant playback device according to claim 1, **characterized in that** the control unit (9) is designed as an integrated part of a decoder (11) which is intended to provide an information signal read from the information medium (1).

5. Vibration-resistant playback device according to claim 1, **characterized in that** the buffer (8) is arranged between a first assembly for the pulse shaping (4) of the signal read from the information medium (1) and a second assembly for error correction (10).

6. Vibration-resistant playback device according to claim 1,
**characterized in that**
the address of last valid data within the buffer (8) is used a reference for the location of the interruption on the information medium (1) and for last valid data within the buffer (8) in order to overwrite an information item which already has been stored with a continuously variable speed in the buffer (8).

7. Vibration-resistant playback device according to claim 1, **characterized in that** the address for the last valid data within the buffer (8) is transfered into a register (R1) and is used together with a valid subcode and together with a synchronizing byte as starting point for the synchronization after an interruption.

8. Vibration-resistant playback device according to claim 1, **characterized in that** a microprocessor (13) is provided by means of which an address of the buffer (8) is calculated from the address of the synchron byte (S0) within the buffer (8) which is transfered together with the valid subcode into a register for detecting an interruption of the reading from the information medium (1), said address corresponding to an address before the last valid address of the buffer (8) before the interruption and that the writing into the buffer (8) at the calculated address is continued with the synchron byte corresponding to the calculated address for synchronization of information read from the information medium (1) within the buffer (8).

9. Vibration-resistant playback device according to claim 1, **characterized in that** in dependence from a first level and a second level below the memory capacity of the buffer (8) with the control unit (9) between a first reading speed (V1) and a second reading speed (V2) continuously variable reading speeds for reading information stored on the information medium (1) are adjusted.

10. Vibration-resistant playback device according to claim 1, **characterized in that** an address of a synchronizing byte of the subcode information of the information read from the information medium (1) which corresponds to an information item stored within the buffer (8), is used for synchronization of data within the buffer (8) after an interruption of the writing of data into the buffer (8).

11. Vibration-resistant playback device according to claim 1, **characterized in that** a microprocessor (13) is provided being connected to a decoder (11) and the buffer (8) and which includes means for calculating and rating of subcode information address data from the subcode decoder (7) and from a control unit (9) for storing an address of the buffer (8) in case of a last valid subcode information item being controlled by the microprocessor (13) and starting the synchronization of the data stream in the buffer by a synchronization byte after an interruption, wherein the control unit (9) contains a first counter (9) which is started by an edge of a synchronization byte which is clocked by a data impulse, that a second counter (Z2) is provided, the clock input of which is connected to the overflow of the first counter (Z1) and which can be reset or pre-adjusted by an address of the buffer (8), said address being provided via a register (R1) connected to the first counter (Z1) in order to provide an addressed connection to the buffer (8).

12. Vibration-resistant playback device according to claim 1, **characterized in that** that the synchronizing of information signals read from the information medium (1) is performed at a location being independent from the address in the buffer by the control unit, wherein a synchron byte (S0) preceding one of the last valid subcode information before the interruption is used for storing the subcode information and for determining an address within the buffer (8) is used for synchronization.

13. Vibration-resistant playback device according to claim 1, **characterized in that** by means of the control unit (9) the writing of information signals from an information medium (1) into the buffer (8) after an interruption at an address of the buffer (8) for the synchronization of information within the buffer (8) read from the information medium (1), wherein said location information signals are written into the buffer (9) with a synchron byte (S0) indepedent from a location before the interruption of the information signal.

14. Vibration-resistant playback device according to claim 1, **characterized in that** the control unit (9) continues the writing of information signals from an information medium (1) into the buffer (8) after an interruption of an address of the buffer (8) for synchronization of information read from the information medium (1) within the buffer (8) at which location already information signals have been written into the buffer (8) by a synchron byte and which yields a distance to the address of the buffer (8) corresponding to the difference in byte with respect to the stored, last valid subcode information item before the interruption at which an information signal item has been written by the synchron byte (S0) into the buffer (8).

15. Vibration-resistant playback device according to claim 1, **characterized in that** the control unit (9) starts the writing of information signals at addresses of the buffer (8) with each synchron byte (S0), stores a subcode information being valid until the occurrence of the synchron byte (S0) and provides an address for writing information signals into the buffer (8) after an interruption of the reading on the information medium, which is formed by resetting the address of the buffer (8) by a number of addresses generated after the synchron byte (S0) which is provided for storing bytes of the information signal corresponding to the number of the bytes between the last valid subcode and the current subcode after the interruption before the location of the interruption of the reading of information stored on the information medium (1).
